Europäisches Patentamt

European Patent Office

Office européen des brevets

(11) Veröffentlichungsnummer: **0 192 155 B1**

(12) **EUROPÄISCHE PATENTSCHRIFT**

(45) Veröffentlichungstag der Patentschrift: **19.06.91**

(51) Int. Cl.⁵: **B60N 2/00**, A47C 7/74

(21) Anmeldenummer: **86101667.3**

(22) Anmeldetag: **10.02.86**

(54) **Verfahren zur Herstellung eines Heizelementes zum elektrischen Beheizen von Sitzen insbesondere Fahrzeugsitzen.**

(30) Priorität: **19.02.85 DE 3505652**

(43) Veröffentlichungstag der Anmeldung:
**27.08.86 Patentblatt 86/35**

(45) Bekanntmachung des Hinweises auf die
Patenterteilung:
**19.06.91 Patentblatt 91/25**

(84) Benannte Vertragsstaaten:
**BE DE FR GB IT NL SE**

(56) Entgegenhaltungen:
**EP-A- 0 057 241**
**DE-C- 3 013 778**
**FR-A- 2 410 412**

(73) Patentinhaber: **I.G. Bauerhin GmbH elektrotechnische Fabrik**

**W-6466 Gründau-Rothenbergen(DE)**

(72) Erfinder: **Altmann, Dieter**
**Herzbergstrasse 23**
**W-6466 Gründau-Lieblos(DE)**
Erfinder: **Haupt, Eberhard**
**Im Rohr**
**W-6466 Gründau-Rothenbergen(DE)**

(74) Vertreter: **Munderich, Paul, Dipl.-Ing.**
**Frankfurter Strasse 84**
**W-6466 Gründau-Rothenbergen(DE)**

## Beschreibung

Die Erfindung betrifft ein Verfahren zur Herstellung eines Heizelementes zum elektrischen Beheizen von Sitzen, insbesondere Fahrzeugsitzen gemäß dem Oberbegriff des Hauptanspruches.

Integrierte elektrische Sitzbeheizungen sind besonders in Fahrzeugsitzen seit vielen Jahren Stand der Technik.

Je nach Sitzausführungen werden die eigentlichen, meist textilen Sitzbeheizungen auf einem Schaumstoffpolsterkern mit aufgeklebt oder auch in vom Bezugsstoff gebildete Taschen eingeschoben und fallweise auch angeheftet. Die Größe und die Anzahl der auf dem Polster anzuordnenden Heizelemente werden im Grunde genommen durch die Raumform des Sitzes bestimmt, wobei die einzelnen Formabschnitte in der Regel die Abgrenzung der Heizelemente bilden.

Alle diese Ausführungen beinhalten die Gefahr, daß durch eine nicht gegebene, vollkommen sichere Befestigung der textilen Heizelemente eine Faltenbildung innerhalb des Heizelementes möglich wird, die zum Bruch des Heizleiters führen kann.

Außerdem stellt die Befestigung mittels Spanndrähten oft eine vorprogrammierte Bruchstelle dar, die man durch Übergänge in weiche, vieladrige Kupferlitzen zu vermeiden versucht.

Die Verbindungsstelle zwischen Heizelementen und der Kupferlitze sind arbeitsaufwendig und die ebenfalls praktizierte seitliche Umgehung des Spanndrahtes schwierig.

Das Dokument DE-C2-30 13 778 beschreibt eine Bügelpresse zur Einbindung eines Heizleiters zwischen Schichten, woraus entsprechend dem Oberbegriff des Anspruches 1 folgende Arbeitsweise zu entnehmen ist:
Ein Verfahren zur Herstellung eines flächig ausgebildeten Heizelementes zum elektrischen Beheizen von Sitzen, dessen isolierter Heizleiter beidseitig abgedeckt ist, wobei jeweils auf einer tragenden Folie zumindest ein Heizleiter mäanderförmig verlegt und durch eine in der Regel gleiche Folie abgedeckt wird, außerdem durch Zufuhr von Wärme und Druck (Bügelpresse) ein fest verbundenes Heizelement gebildet wird. Dem genannten Dokument ist des weiteren zu entnehmen, daß es bekannt ist, den Heizleiter ohne Entstehen einer Bindung mit den Folien in den entsprechend der Verlegung ausgebildeten Kanälen einliegend auszuführen.

Es läßt sich aber bei dieser Ausführungsform nicht immer vermeiden, daß die Heizleiter mit den Folien verkleben, wodurch der erwünschte bindungslose Zustand beeinträchtigt wird.

Es ist deshalb Aufgabe dieser Erfindung, ein Verfahren nach der eingangs beschriebenen Art zu nennen, das die bindungslose Einbettung der Heizleiter in einfachster Weise ermöglicht, wobei das Heizelement die Verformung durch den Gebrauch aufnimmt, ohne daß das elastische Verhalten des Schaumpolsterkernes eingeengt wird.

Die erfindungsgemäße Lösung dieser Aufgabe geht aus dem kennzlichnenden Teil des Anspruchs 1 herror.

Die mäanderförmige Verlegung isolierter Heizleiter auf einer tragenden Folie aus elastischem Kunststoff läßt sich auf einfache Weise mit einer Bügelpresse, wie sie durch die DE-PS 30 13 778 ausgewiesen ist, realisieren.

Das Kriterium dieser Vorrichtung ist, daß die eigentliche Preßplatte mit einer Bügelplatte aus elastischem, porösen, bügeltemperaturbeständigen Material hoher Wärmeleitfähigkeit durch Kleber verbunden ist und daß die das Elastizitätsverhalten ausweisende Materialkonstanten der Bügelplatte so gewählt sind, daß das Volumen der Nadeln der Nadelschablone während des Preßvorganges voll in ihr verdrängbar ist bzw. das verdrängte Volumen nach Abheben der mit ihr verbundenen Preßplatte rückbildbar ist.

Die Verlegung des Heizleiters erfolgt um nach dem Verlegeplan eingeordnete Stifte, die jeweils die Umlenkung des Heizleiters in eine andere Richtung bestimmen. Die Änderung des Verlegeplans ist denkbar einfach.

Um die Gleitfähigkeit des isolierten Heizleiters aufrechtzuerhalten, muß die thermische Formbeständigkeit der Heizleiterisolierung die der Folie überschreiten. Die anschließend stattfindende Verbindung der Heizelemente zwischen den Folien erfolgt durch Zufuhr von Wärme und Druck, wie sie beispielsweise durch die bereits erwähnte Ausbildung nach der DE-PS 30 13 778 ermöglicht wird.

Wesentlich für die Qualität des Heizelementes ist die in spannungsfreiem Zustand gegebene Länge des Heizleiters in Verbindung mit den elastischen Eigenschaften des Heizelementes.

Die Vielzahl der vorgeschlagenen, in engem Abstand zueinander verlaufenden Mäanderschlingen erlauben die Auslegung eines in seiner Längendimensionierung überdurchschnittliche Heizleiterlänge, so daß bei Verformung durch Belastung der durch die Isolierung entstandene Kanal in keiner Weiche den Heizleiter bei der gegebenen Streckung der Mäander zueinander geschädigt oder umgekehrt der Heizleiter überbeansprucht wird.

In diesem Zusammenhang wird vorgeschlagen, die Heizleiter in Abstand kleiner als 15 mm mäanderförmig einzubetten.

Zur Herstellung bei Verwendung von Sitz oder Lehne bildenden Polster-Formteilen wird vorgeschlagen, daß diese mit einem Bezugstoff bespannt werden, wobei die unter dem Bezug liegenden Oberflächen des Schaumteiles zuvor auf die unter dem Bezug liegenden Oberflächen des Schaumteiles anzuordnenden Heizelemente angeschäumt oder angeklebt werden.

Hierbei sollte dem Anschäumen ein Vorrang vor dem Ankleben gegeben werden, wobei allerdings - je nach Zugänglichkeit - oft unterschiedliche Befestigungen vorgesehen werden müssen.

Zur Herstellung von Sitz- oder Lehnenpolsterungen im Tiefziehverfahren wird vorgeschlagen, daß der luftdichte Bezugstoff des Sitzes bzw. der Lehne durch Vakuum auf eine mit geprägter Oberfläche ausgebildete Form gezogen wird, wobei auf der Innenseite des Bezuges die zu diesem gerichtete Oberflächen der Heizelemente angeklebt bzw. ankaschiert sind, und daß bei Zuschäumen der Form die mit den zu der Unterseite des Bezuges gerichteten Heizelemente sich fest am Bezug verbinden.

Zum Aufbau wird vorgeschlagen, daß Folien in Stärken von 20 bis 200 $\mu$ verarbeitet werden, und daß der Heizleiter aus einer mindestens 7-adrigen Litze mit Einzeldrähten unter 0,1 mm Durchmesser gebildet wird, die mit einer dünnen, an den beiden Folien nicht bindenden Isolierung versehen werden.

Das vorgeschlagene Verfahren wird in vollem Umfang der Aufgabenstellung gerecht.

## Beispiel

Die zur Beheizung von Fahrzeugsitzen vorgesehenen, großflächig ausgebildeten Heizelemente bestehen jeweils aus zwei thermoplastischen Folien gleicher Größe und gleicher Eigenschaften, wobei von einer Co-Polyamidbasis ausgegangen wird. Die Dicke der Folie beträgt 0,08 mm, die Zugfestigkeit ca. 8 kp/mm², der Elastizitätsmodul ca 250 kp/mm² und die Temperaturformbeständigkeit nach Martens etwa 100° C.

Die Isolierung des Heizleiters besteht ebenfalls aus einem Co-Polyamid oder dgl. Werkstoff und weist eine Zugfestigkeit von 6 kp/mm², einen Elastizitätsmodul von 190 kp/mm² und eine Temperaturformbeständigkeit nach Martens von 230° C aus.

Der zwischen den thermoplastischen Kunststoff-Folien verlegte isolierte Heizleiter wird, wie bereits beschrieben, bei Aufrechterhaltung seiner Gleitfähigkeit zwischen den Folien, durch eine Bügelpresse oder dgl. verbunden. Die höhere Formbeständigkeit der Isolierung sichert die Beweglichkeit des Heizleiters zwischen den Folien.

Die einzelnen Heizelemente können sowohl lediglich unter den Bezug der Sitzfläche als auch unter den Bezug der Lehnen fixiert werden bwz. auf den Schaumpolsterteilen integriert werden.

## Ansprüche

1. Verfahren zur Herstellung eines Heizelementes zum elektrischen Beheizen von Sitzen, insbesondere Fahrzeugsitzen, durch mindestens ein flächig ausgebildetes Heizelement, dessen isolierter Heizleiter beidseitig abgedeckt ist und ohne Entstehen einer Bindung in den entsprechend der Verlegung ausgebildeten mäanderförmigen Kanälen einliegt, dadurch gekennzeichnet, daß auf jeweils einer tragenden Folie aus thermoplastischem Kunststoff zumindest ein mäanderförmig isolierter Heizleiter verlegt und durch eine in der Regel gleiche Folie abgedeckt wird, wobei die thermische Formbeständigkeit der Heizleiterisolation die der Folie um ca. 50% überschreitet, so daß nach anschließender Zufuhr von Wärme und Druck die Gleitfähigkeit des isolierten Heizleiters innerhalb des Folienverbundes aufrechterhalten wird, und daß die elastischen Eigenschaften des Heizelementes durch die Wahl eines möglichst geringen Mäanderabstandes und einer in spannungsfreiem Zustand überdurchschnittlichen Länge des Heizleiters eingestellt werden so daß das Heizelement bei Verformung durch Belastung mindestens bis zur doppelten Länge und Breite zerstörungsfrei dehnbar ist.

2. Verfahren nach Anspruch 1, dadurch gekennzeichnet, daß bei Verwendung von Sitz oder Lehne bildenden Polster-Formteilen diese mit einem Bezugsstoff bespannt werden, wobei die unter dem Bezug liegenden Oberflächen des Schaumteiles zuvor auf die unter dem Bezug liegenden Oberflächen des Schaumteiles anzuordnenden Heizelemente angeschäumt oder angeklebt werden.

3. Verfahren nach Anspruch 1, dadurch gekennzeichnet, daß bei der Herstellung von Sitz- oder Lehnenpolsterung im Tiefziehverfahren der luftdichte Bezugsstoff des Sitzes bzw. der Lehne durch Vakuum auf eine mit geprägter Oberfläche ausgebildete Form gezogen wird, wobei auf der Innenseite des Bezuges die zu diesem gerichteten Oberflächen der Heizelemente angeklebt bzw. ankaschiert sind, und daß bei Zuschäumen der Form die mit dem zu der Unterseite des Bezuges gerichteten Heizelemente sich fest am Bezug verbinden.

4. Verfahren nach Anspruch 1, dadurch gekennzeichnet, daß Folien in Stärken von 20 bis 200 $\mu$ Verarbeitet werden, und daß der Heizleiter aus einer mindestens 7-adrigen Litze mit Einzeldrähten unter 0,1 mm Durchmesser gebildet wird, die mit einer dünnen, an den beiden Folien nicht bindenden Isolierung versehen werden.

## Claims

1. A method for fabrication of a heating element for electrically heating of seats, in particular, of automotive vehicle seats, through at least one flatly formed heating element, the insulating heat conductor of which is covered on either side and is embedded, without forming a bond, in the meander-type passageways formed in conformity with the laying, characterized in that mounted on a supporting foil each of thermoplastic resin is at least one meander-type insulated heat conductor and is covered by a normally identical foil, with the thermal stability of shape of the heat conductor insulation exceeding the one of the foil by about 50% so that after a subsequent supply of heat and pressure, the slidability of the insulated heat conductor is maintained within the foil compound, and that the resilient properties of the heating element are adjusted by selecting the meander spacing as small as possible and by a length of the heat conductor above average in tension-free condition, so that the heating element when deformed by load is expandable without breaking at least to the double length and width.

2. A method according to claim 1, characterized in that when using upholster shaped parts forming seat or back, the same are covered by a textile coating, with the surfaces of the foam portion lying underneath the coating being previously foamed or cemented onto the heating elements to be disposed on the surfaces of the foam portion underneath the coating.

3. A method according to claim 1, characterized in that during the fabrication of seat or back upholster in the deep-drawing process, the airtight coating of the seat and back, respectively, is drawn by vacuum onto a mould of embossed surface, with the surfaces of the heating elements directed to the coating being cemented or backed onto the interior of the coating, and that during closing of the mold by foaming, the heating elements directed toward the bottom side of the coating are closely connected with the coating.

4. A method according to claim 1, characterized in that foils having strengths of between 20 and 200$\mu$ are used, and that the heat conductor is formed of a strand having at least 7 cables, the individual wires of which are of a diamter of under 0.1 mm provided with a thin insulation not bonded to the two foils.

## Revendications

1. Procédé pour la fabrication d'un élément chauffant pour le chauffage électrique de sièges, et en particulier de sièges de véhicules, au moyen d'au moins un élément chauffant qui est réalisé sous forme plate et dont le conducteur chauffant isolé' est recouvert des deux côtés et inséré, sans naissance d'une liaison, dans les canaux en forme de méandres formés selon son plan de pose, caractérisé par le fait qu'au moins un conducteur chauffant isolé en forme de méandres est à chaque fois posé sur une feuille de support en matière synthétique thermoplastique et recouvert d'une feuille qui est normalement identique, la résistance à la déformation thermique de l'isolation du conducteur chauffant dépassant de 50% environ celle de la feuille, de sorte qu'après un apport consécutif de chaleur et de pression, la capacité de glissement du conducteur chauffant isolé est conservée à l'intérieur de l'ensemble des feuilles réunies, et par le fait que les propriétés élastiques de l'élément chauffant sont réglées par le choix d'une distance aussi faible que possible entre les méandres et d'une longueur du conducteur chauffant qui est surdimensionnée à l'état exempt de contraintes, de sorte que l'élément chauffant, lors de sa déformation par la charge, peut s'allonger sans être détruit jusqu'au double de sa longueur et de sa largeur.

2. Procédé selon la revendication 1, caractérisé par le fait que, dans le cas de l'utilisation de pièces moulées de rembourrage formant un siège ou un dossier, celles-ci sont recouvertes d'une matière de revêtement, les surfaces de la pièce expansée situées sous le revêtement étant auparavant expansées ou collées sur des éléments chauffants qui doivent être placés sur les surfaces de la pièce expansée situées sous le revêtement.

3. Procédé selon la revendication 1, caractérisé par le fait que, dans le cas de la fabrication de rembourrages de sièges ou de dossiers par thermoformage, la matière de revêtement étanche à l'air du siège ou du dossier, respectivement, est appliquée par le vide sur un moule réalisé avec une surface munie d'une empreinte, les surfaces des éléments chauffants qui sont dirigées vers le côté intérieur du revêtement étant collées ou, respectivement, laminées sur celui-ci, et par le fait que, lors de l'expansion dans le moule, les éléments chauffants se relient solidement au revêtement par leur face dirigée vers la face inférieure du revêtement.

4. Procédé selon la revendication 1, caractérisé par le fait que l'on traite des feuilles dont les épaisseurs vont de 20 à 200 $\mu$, et par le fait que le conducteur chauffant est constitué par un cordon à sept conducteurs au moins dont le diamètre des fils individuels est inférieur à 0,1 mm et qui sont munis d'une isolation mince qui ne se lie pas aux deux feuilles.